# EUROPEAN PATENT APPLICATION

(11) **EP 4 279 333 A1**
(43) Date of publication of application: **22.11.2023**
(21) Application number: 22174010.3
(22) Date of filing: 18.05.2022
(51) Int. Cl.: B60P 1/28

(54) **BOX SERVICE SUPPORT OF DUMP TRUCK AND DUMP TRUCK COMPRISING BOX SERVICE SUPPORT**

(71) Applicant: Sandvik Mining and Construction Oy, 33330 Tampere (FI)
(72) Inventor: VUOKILA, Marko, 33311 Tampere (FI)
(74) Representative: Sandvik

(57) **Abstract**

A box service support (1) of a dump truck having a box for securing the box in service position, the box service support comprising a body (2), having a fixed length, and a first end (3) and a second end (4), wherein the box service support is rotatable around the first end (3) and between a transportation position and a service position, wherein in the transportation position, the second fastening means are fastenable to the end of the box, and in the service position, the second fastening means are fastenable to the dump truck frame, or in the transportation position, the second fastening means are fastenable to the dump truck frame, and in the service position, the second fastening means are fastenable to the end of the box.

## Description

### TECHNICAL FIELD

The present invention relates to box service supports and dump trucks comprising a service support.

### BACKGROUND OF THE ART

Dump trucks, such as mining trucks and construction trucks, are used in mining and construction activities for loading, hauling, and unloading a variety of materials. Materials may include for example rocks, gravel, mineral ores, and stone blocks, which are heavy and hard objects. Thus, the box needs to be rigid and strong, which makes it very heavy. Below the box, the dump truck comprises components which require maintenance. To access these components, the box needs to be lifted to upper position and, for safety reasons, the box must be secured into upper position. Known solution is to use mechanical support which is arranged under the box, and which is moved between the frame and the box floor for securing the box. As the service support must bear the weight of the box and there is limited space for the service support, short service supports are preferred. These conventional supports leaves only little room to work under the box.

### OBJECTIVE OF THE INVENTION

The objective of the device is to alleviate the disadvantages mentioned above. In particular, it is an objective of the present device to provide more room for maintenance activities for the components of the dump truck under the box.

### SUMMARY

According to a first aspect, the present invention provides a device for securing the box of a dump truck in upper position.

The device is a box service support of a dump truck having a box for securing the box in service position, the box service support comprising a body, having a fixed length, and a first end and a second end. The first end comprises first fastening means being fastenable to the back end of box of the dump truck or to the dump truck frame, and the second end comprises second fastening means being fastenable detachably to the dump truck frame and to the back end of the box of the dump truck. The first fastening means comprises rotating means for rotating the box service support around the first end and between a transportation position and a service position, wherein in the transportation position, the second fastening means are fastenable to the end of the box, and in the service position, the second fastening means are fastenable to the dump truck frame, or in the transportation position, the second fastening means are fastenable to the dump truck frame, and in the service position, the second fastening means are fastenable to the end of the box.

The advantage of the device is that the box may be lifted in uppermost position leaving more space to maintenance the components below the box, while securing the box in the upper position. Further, the box support does not require any space below the box.

In an embodiment of the device, the body is a rigid part.

In an embodiment of the device, the body is pliant part, such as wire, rope or chain.

In an embodiment of the device, the first fastening means comprises a first plate and the rotating means comprises a hole for receiving a pin, shaft or such for fastening the box service support to the dump truck.

In an embodiment of the device, the second fastening means comprises at least one flange and a hole for receiving a pin, shaft or such for fastening the box service support to the dump truck.

In an embodiment of the device, the second fastening means comprises two parallel flanges having co-axial holes for receiving a pin, shaft or such for fastening the box service support to the dump truck.

In an embodiment of the device, the first fastening means and/or the second fastening means comprise locking means for locking the box service support to the back end of the box or to the frame of the dump truck.

According to a second aspect, the present invention provides a dump truck comprising a box, a frame and a box service support according to any one of the previous embodiments, wherein the box comprises a front end and a back end on opposite sides of the box in travel direction of the dump truck, the box is fastened to the frame pivotably so that the box is pivotable between upper position and lower position around a pivoting axis perpendicular to the traveling direction of the dump truck, and the pivoting axis is closer to the back end of the box than the front end in longitudinal direction, the box has a service position, wherein the box is pivoted to the upper position. In the service position of the box, the box service support is fastened to the back end of the box and to the frame of the dump truck by the first fastening means and the second fastening means for preventing pivotal movement of the box towards the frame.

In an embodiment, the dump truck comprises a fastening flange, having a hole, whereto the second fastening means are fastened in service position.

In an embodiment, the second fastening means comprises two parallel flanges having co-axial holes and, in service position, the fastening flange is arranged between the two parallel flanges so that the holes of the parallel flanges and the hole of the fastening flange are co-axial, and a locking pin is arranged through each hole for locking the second fastening means to the fastening flange.

In an embodiment, in the transportation position, the first fastening means and the second fastening means are fastened to the back end of the box, and
- in the service position, the first fastening means are fastened to the back end of the box and the second fastening means are fastened to the frame.

In an embodiment, the fastening flange is attached to the frame of the dump truck.

In an embodiment, the frame comprises a rear axle and the fastening flange is arranged underneath the rear axle.

In an embodiment, in transportation position, the first fastening means and the second fastening means are fastened to the frame of the dump truck, and the fastening flange is attached to the back end of the box.

In an embodiment, the dump truck comprises locking means for, in service position, locking the box service support to the back end of the box and to the frame of the dump truck.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1 and 2** show a box service support of a dump truck,
**Fig. 3** is a side view of a back section of a dump truck comprising a box service support in transportation position,
**Fig. 4** is a back view of a back section of a dump truck comprising a box service support in transportation position
**Fig. 5** is a side view of a back section of a dump truck comprising a box service support in service position, and
**Fig. 6** is a detailed view of the box service support in service position.

### DETAILED DESCRIPTION

A dump truck, such as mining truck and construction truck, are used in mining and construction activities for loading, hauling, and unloading a variety of materials. It comprises a frame and a box, which comprises a front end, facing towards the driving direction, and a back end, facing backwards. The box is fastened to the frame pivotably so that the front end of the box is lifted while the back end remains substantially at the same level. Dump trucks require maintenance occasionally and some of its components are located below the box and, therefore, they are not easily accessible. For the maintenance, the box must be lifted, i.e. pivoted, into upper position. For safety reasons, the box must be secured into the upper position before the maintenance below the box may begin. The box service support provides mechanical means to secure the box into the upper position.

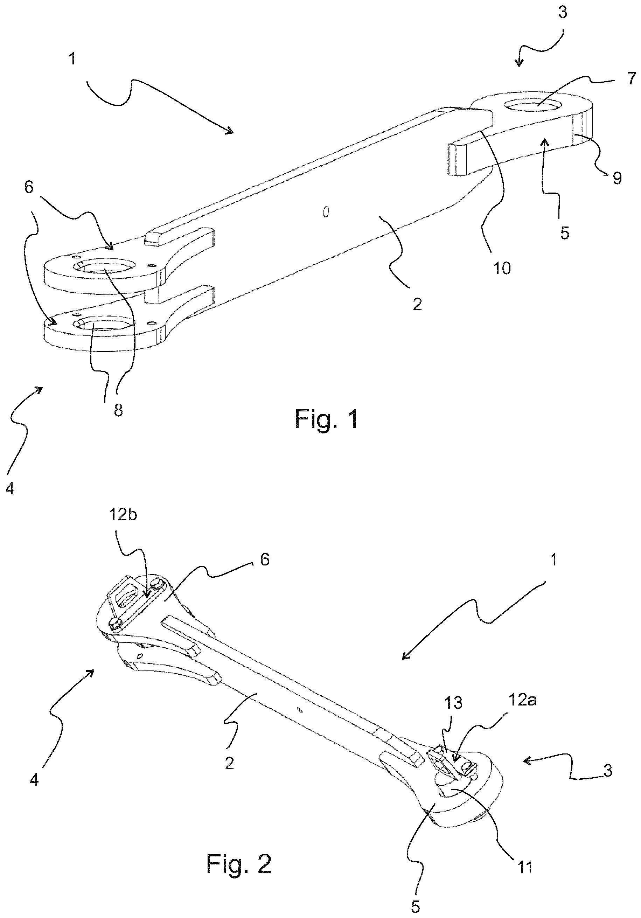

Figure 1 and figure 2 show a box service support 1 of a dump truck. The box service support 1 comprises a body 2 having a fixed length and a first end 3 and a second end 4, which are at opposite ends of the body. The first end 3 comprises first fastening means being fastenable to the back end of the box or to the dump truck frame depending on whether the box service support is stored at the back end of the dump truck or at the frame when it is not in use. Further, the second end 4 comprises second fastening means being fastenable detachably to the dump truck frame and to the back end of the box separately. So, the box service support 1 may be fastened with both fastening means to the frame or to the back end of the box, when it is not in use. When the box service support 1 is needed, the box is lifted into upper position, the second fastening means are detached from the frame or the back end of the box and fastened to the other, i.e. to the frame or to the back end. Thus, the box service support 1 is extending from the back end of the box to the frame, whereby it prevents the box being lowered, accidentally or intentionally, towards the frame. Regardless of the storing location when the box service support is not in use, the structure of the box service support is the same.

The first fastening means comprises rotating means for rotating the box service support around the first end 3 and between a transportation position, i.e. when the dump truck is driving or operating, and a service position, i.e. when the dump truck is in service. In the transportation position, the second fastening means 6 are fastened to the end of the box, and in the service position, the second fastening means 6 are fastened to the dump truck frame. Optionally, in the transportation position, the second fastening means 6 are fastened to the dump truck frame, and in the service position, the second fastening means 6 are fastened to the back end of the box.

The body 2 of the box service support 1 may be a rigid part, as shown in figure 1, such as rod, plate or strip. The rigid part may be made for example of metal.

Optionally, the body 1 is a pliant part, such as a wire, rope or chain.

The first fastening means may comprise a first plate 5, which is fastened to the body 1 e.g. by welding. Optionally the first fastening means and/or the first plate 5 may be uniform part of the body, e.g. the body and the fastening means are made by casting or machining. The material of the first plate 5 may be for example metal. The first plate 5 comprises two plane surfaces opposite to each other and an edge 9 defining the perimeter of the first plate. The first plate 5 may be fastened to the body 1 from its edge 9. Optionally, the first plate may comprise a slot 10 extending from the edge towards the center of the first plate, and the body 1 is fastened to the slot 10. The edge 9 of the first plate may be shaped. For example, the end, which is opposite to the body, may be rounded.

The rotating means may comprise a hole 7 which is arranged on the first plate 5 and being perpendicular to the longitudinal axis of the body and/or perpendicular to the plane surfaces of the first plate. The hole 7 may receive a pin 11, shaft or such which is fastened to the dump truck for fastening the box service support 1 to the dump truck while being able to rotate around the central axis of the hole 7 and/or the pin. Additionally, the hole 7 may be fastened to a closable loop or such in the dump truck. Optionally, the rotating means may comprise a hinge for rotating the box service support around the first end between the transportation position and the service position.

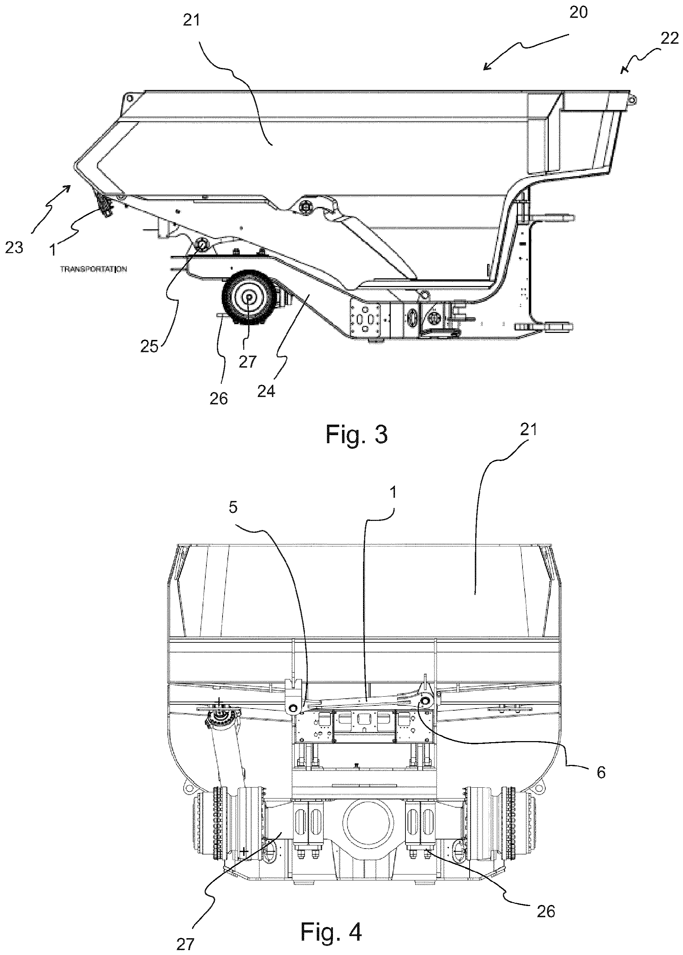

The second fastening means may comprise at least one flange 6 and a hole 8 for receiving a pin, shaft or such for fastening the box service support to the dump truck. The pin received to the hole of the second fastening means is fastened to the dump truck for securing the second end to the dump truck. Optionally, the second fastening means comprises two parallel flanges 6 having co-axial holes 8 for receiving a pin, shaft or such (similar which is inserted to the first fastening means) for fastening the box service support to the dump truck. Figures 1 and 3 shows an embodiment, wherein the second fastening means comprises two parallel flanges 6. The flange or flanges 6 of the second fastening means may be shaped and fastened (or being uniform) to the body in the same way as the first plate 5 of the first fastening means.

The first fastening means and/or the second fastening means may comprise locking means 12a, 12b for locking the box service support to the back end of the box or to the frame of the dump truck. One embodiment of the locking means is shown in figure 2, wherein the locking means comprises a lever 13 at both ends of the box service support, and the levers at each end is fastened to the surface of the flange or flanges at the first end and/or the second end of the box service support. The levers 13 may be fastened detachably to the first plate 5 and/or to the flange (s) 6 by bolts or other mechanical means. The lever 13 may be pivotable arranged to be pivoted between a locking position and a free position so that in the locking position, the pivotable lever is locking the pin received to the hole at the rotating means. In the free position, the pin may be inserted through the hole. The locking means at each end of the box service support may comprise two said pivotable levers arranged on opposite sides of the first plate and/or flange or flanges so that the pin is arranged between the pivotable levers, when the pin is inserted through the hole on the flange and the pivotable levers in the locking position. Optionally, the locking means comprises a shaft, rod or such, that is arranged to be inserted through a hole in the pin or pins for preventing axial movement of the pin, i.e. locking the box service support to the dump truck.

Figures 3 and 4 show a back section of a dump truck 20 comprising a box 21 and a box service support 1 fastened at a back end 23 of the box. Figure 3 is a side view and figure 4 is a back view. The box 21 comprises a front end 22 and the back end 23 on opposite sides of the box 21 in travelling direction of the dump truck 20. The box 21 is fastened to the frame 24 of the dump truck 1 pivotably so that the box may be pivoted between an upper position and lower position around a pivoting axis 25. In figure 3 and 4, the box 21 is in lower position and the box service support 1 is in transportation position, i.e. fastened to the back end 23 of the box with first fastening means, i.e. with first plate 5 in this figure, and the second fastening means, flanges 6 in this figure. Optionally, in transportation position, the box service support could be fastened to the frame with first fastening means and the second fastening means.

The dump truck 20 comprises a fastening flange 26, which may be fastened to the frame 24 of the dump truck 20 or to the back end 23 of the box 21 depending on which location the box service support 1 is stored when in transportation position. The fastening flange 26 is fastened to the frame 24 when the box service support 1 is stored at the back end 23 of the box, and vice versa. In figures 3 and 4, the box service support 1 is stored at the back end 23 of the box and the fastening flange 26 is fastened to the frame 24 of the dump truck 20, namely to a back axle 27 of the dump truck between the back tires (not shown in figures) and it is extending backwards from the back axle 27. Optionally, the fastening flange 26 may be fastened to other components of the dump truck 20 so that it extends backwards so that the second fastening means of the box service support may be fastened to it in service position. Optionally, similar fastening flange or flanges may be used for fastening first fastening means and/or the second fastening means of the box service support 1 to the back end 23 of the box (or to the frame) in the transportation position.

The fastening flange 26 may comprise a hole, whereto the second fastening means are fastened when the box service support 1 is in service position. The same pin that is inserted through the second fastening means (flange or flanges having a hole) may be inserted through the hole in the fastening flange to fasten second fastening means of the box service support to the dump truck. For example, in service position, the fastening flange 26 may be arranged between the two parallel flanges 6 of the second fastening means so that the holes 8 of the parallel flanges 6 and the hole of the fastening flange 26 are co-axial, and the locking pin is arranged through each hole for locking the second fastening means to the fastening flange 26.

Optionally, the dump truck comprises a loop or other fastening means for fastening the box service support to the dump truck.

The dump truck 20 may comprise locking means for locking, in service position, the box service support 1 to the dump truck 20. The locking means may comprise pivotable lever or levers which may lock the fastening means of the box service support to the dump truck. Optionally, the locking means may comprise a shaft, rod or pin, which is inserted through a hole in the locking pin for preventing axial movement of the locking pin, i.e. locking the locking pin in its place. The locking means may have similar structure as the optional locking means of the box service support described earlier in this disclosure.

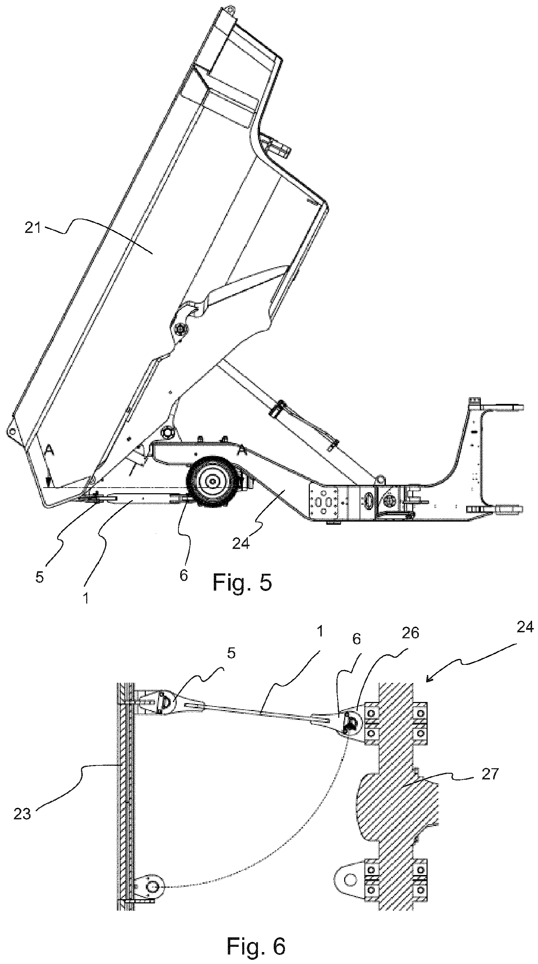

Figures 5 and 6 show a back section of a dump truck 20 comprising a box 21 and a box service support 1 fastened to the back end 23 of the box and to the frame 24 of the dump truck. Figure 3 is a side view and figure 4 is a detailed view of the box service support in service position. In these figures, the box 21 is pivoted to the upper position and components below the box is exposed for the maintenance. The box service support 1 fastened to the back end 23 of the box with first fastening means, i.e. first flange 5 in this embodiment, and it is rotated around the first fastening means to the service position, and the second fastening means, i.e. flanges 6 in this embodiment, are fastened to the frame 24 of the dump truck 20. The second fastening means are fastened to the fastening flange 26, which is extending backwards from the rear axle. The fastening flange 26 comprises a hole and the holes in the second fastening means are aligned with the hole in the fastening flange and a locking pin is inserted through the aligned holes and locked to prevent its axial movement. Figure 6 shows also another fastening flange fastened to the back end of the box for fastening the second fastening means to it when the box service support is in transportation position.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. A box service support (1) of a dump truck having a box for securing the box in service position, the box service support comprising a body (2), having a fixed length, and a first end (3) and a second end (4), wherein
- the first end (3) comprises first fastening means being fastenable to the back end of box of the dump truck or to the dump truck frame, and
- the second end (4) comprises second fastening means being fastenable detachably to the dump truck frame and to the back end of the box of the dump truck,
c h a r act e r i zedin that
- the first fastening means comprises rotating means for rotating the box service support around the first end (3) and between a transportation position and a service position, wherein
- in the transportation position, the second fastening means are fastenable to the end of the box, and in the service position, the second fastening means are fastenable to the dump truck frame, or
- in the transportation position, the second fastening means are fastenable to the dump truck frame, and in the service position, the second fastening means are fastenable to the end of the box.

2. The box service support cording to claim 1, wherein the body (2) is a rigid part.

3. The box service support cording to claim 1, wherein the body (2) is pliant part, such as wire, rope or chain.

4. The box service support according to any one of the preceding claims, wherein the first fastening means comprises a first plate (5) and the rotating means comprises a hole (7) for receiving a pin, shaft or such for fastening the box service support to the dump truck.

5. The box service support according to any one of the preceding claims, wherein the second fastening means comprises at least one flange (6) and a hole (8) for receiving a pin, shaft or such for fastening the box service support to the dump truck.

6. The box service support according to any one of the preceding claims, wherein the second fastening means comprises two parallel flanges (6) having co-axial holes (8) for receiving a pin, shaft or such for fastening the box service support to the dump truck.

7. The box service support according to any one of the preceding claims, wherein the first fastening means and/or the second fastening means comprise locking means (12a, 12b) for locking the box service support to the back end of the box or to the frame of the dump truck.

8. A dump truck (20) comprising a box (21), a frame (24) and a box service support (1) according to any one of the previous claims, wherein
- the box (21) comprises a front end (22) and a back end (23) on opposite sides of the box in travel direction of the dump truck,
- the box (21) is fastened to the frame (24) pivotably so that the box is pivotable between upper position and lower position around a pivoting axis (25) perpendicular to the traveling direction of the dump truck, and the pivoting axis (25) is closer to the back end of the box than the front end in longitudinal direction,
- the box has a service position, wherein the box is pivoted to the upper position,
**characterized in that**
in the service position of the box, the box service support (1) is fastened to the back end of the box (23) and to the frame (24) of the dump truck by the first fastening means and the second fastening means for preventing pivotal movement of the box towards the frame.

9. A dump truck (20) according to claim 8, wherein the dump truck comprises a fastening flange (26), having a hole, whereto the second fastening means are fastened in service position.

10. A dump truck (20) according to claim 9, wherein the second fastening means comprises two parallel flanges (6) having co-axial holes (8) and, in service position, the fastening flange (26) is arranged between the two parallel flanges so that the holes of the parallel flanges and the hole of the fastening flange are co-axial, and a locking pin is arranged through each hole for locking the second fastening means to the fastening flange (26).

11. A dump truck (20) according to any one of claims 8 to 10, wherein
- in the transportation position, the first fastening means and the second fastening means are fastened to the back end (23) of the box, and
- in the service position, the first fastening means are fastened to the back end (23) of the box and the second fastening means are fastened to the frame (24).

12. A dump truck (20) according to any one of claims 9 to 11, wherein the fastening flange (26) is attached to the frame (24) of the dump truck.

13. A dump truck (20) according to claim 12, wherein the frame (24) comprises a rear axle (27) and the fastening flange (26) is arranged underneath the rear axle.

14. A dump truck (20) according to claim 9 or 10, wherein, in transportation position, the first fastening means and the second fastening means are fastened to the frame (24) of the dump truck, and the fastening flange (26) is attached to the back end (23) of the box (21).

15. A dump truck (20) according to any one of claims 8 to 14, wherein the dump truck comprises locking means for, in service position, locking the box service support (1) to the back end (23) of the box and to the frame (24) of the dump truck.
